# EUROPEAN PATENT APPLICATION

(11) **EP 3 364 218 A1**
(43) Date of publication of application: **22.08.2018**
(21) Application number: 17197318.3
(22) Date of filing: 19.10.2017
(51) Int. Cl.: G01V 3/165, B64D 3/02

(54) **AIRBORNE TOWED FLAT ANTENNAS**

(30) Priority: 21.02.2017 EP 17157162
(71) Applicant: Action Communication, 83390 Cuers (FR)
(72) Inventor: GIORDANA, Alexis, 83390 PIERREFEU (FR)
(74) Representative: de Jong, Jean Jacques

(57) **Abstract**

An aircraft-towed device, comprises a frame including a leading pole (12a) and a trailing pole (12b), the poles being substantially transversal to a flight direction; an aerodynamic damping structure (16) attached to the trailing pole (12b); first and second longitudinal stays (32a, 32b) attached between the poles, establishing substantially straight lateral edges of the frame under traction; third and fourth longitudinal stays (36a, 36b), each attached between the leading and trailing poles; third and fourth transversal poles (40a, 40b), each attached to the third and fourth stays; and an antenna (38) including a conductor wound in a loop along the third pole, the third stay, the fourth pole, and the fourth stay.

## Description

### Field

The present disclosure relates to airborne structures designed to achieve measurements, in particular geophysical, and more specifically to flat antennas designed to be towed by an aircraft.

### Background

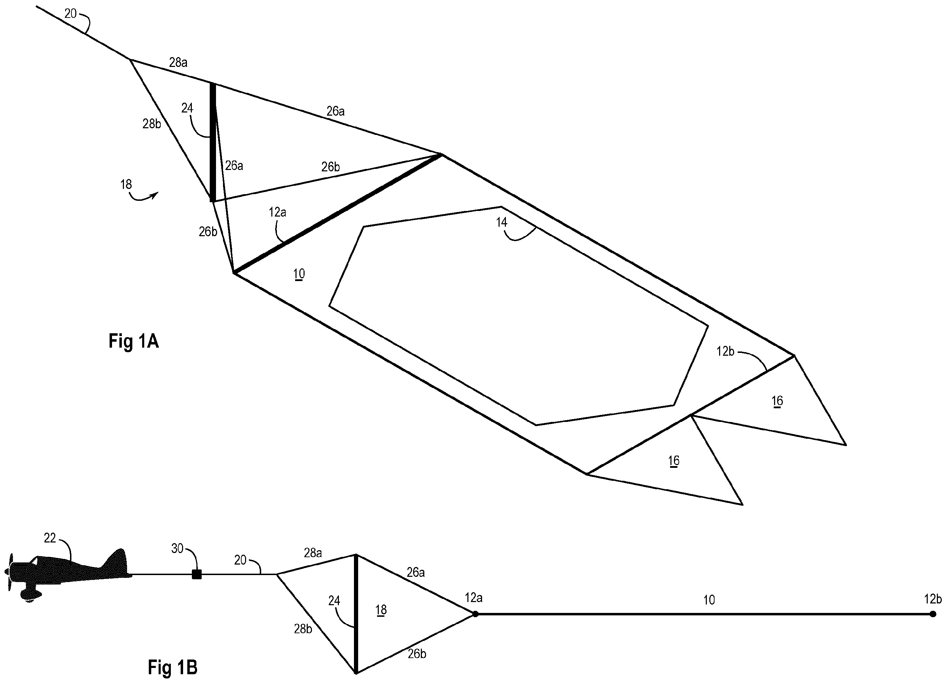

Figures 1A and 1B, which will be described together, are a schematic perspective view and a side view of a towed airborne device for geophysical measurement purposes, such as disclosed in international patent application WO2015/189483. A main support platform 10 includes a rectangular piece of fabric held between a leading pole 12a and a trailing pole 12b. The platform 10 may have considerable proportions, such as 15 meters wide by 50 meters long. The size of the platform is mainly determined by the desired characteristics of a transmission antenna 14 carried by the platform. The transmission antenna includes one or more turns of a conductor that runs near the edges of the platform. A reception antenna is usually also provided, that may occupy a significantly smaller surface area than the transmission antenna.

It is usually desired to keep the platform 10 flat, either horizontally (as shown), or vertically. Although the platform is supple, the aircraft velocity combined with air friction maintains the platform substantially planar. Planarity may be promoted by pennants 16 attached to the trailing edge of the platform.

Moreover, it is desired that the platform assumes and maintains a desired attitude (such as horizontal) starting from an arbitrary attitude, especially upon take-off. This may be achieved with an attitude-correcting structure 18 arranged between the leading pole 12a and a towing cable 20 attached to the aircraft 22.

The structure 18 includes an attitude-correcting pole 24 configured, through a specifically tailored stay system, to assume a vertical position when towed. For obtaining a horizontal attitude of the platform 10, two traction stays 26a respectively connect a first end of the attitude-correcting pole 24 to two opposite ends of the leading pole 12a, and two further traction stays 26b connect a second end of the pole 24 to the two opposite ends of the leading pole 12a. As seen in figure 1B, the traction stays 26a, 26b converging to a same point of the leading pole 12a may have the same length.

The two ends of the attitude-correcting pole 24 are moreover connected to an end of the towing cable 20 by two respective stays 28a, 28b. The lengths of these stays may be chosen, as shown, so that the top one 28a is shorter than the bottom one 28b, which has the effect of promoting the verticality of pole 24 during flight.

Intermediate traction stays (not shown for sake of clarity) may be provided for reducing flexion of the involved poles.

The towing cable 20 is in fact separated in two segments, one linked to the aircraft, and the other to the towed device. The two segments are connected to each other mechanically and electrically through an attachment element 30, this element being configured to be hooked in flight by the aircraft. More ample details may be found in the above-mentioned patent application.

A towed device such as disclosed above may cause difficulties in various circumstances. For instance, using a supple fabric for larger platforms 10 happens to cause significant drag, to the extent that smaller aircraft may not have sufficient power for attaining sufficient speed to ensure a stable horizontal attitude.

### Summary

An aircraft-towed device is generally provided, comprising a frame including a leading pole and a trailing pole, the poles being substantially transversal to a flight direction; an aerodynamic damping structure attached to the trailing pole; first and second longitudinal stays attached between the poles, establishing substantially straight lateral edges of the frame under traction; third and fourth longitudinal stays, each attached between the leading and trailing poles; third and fourth transversal poles, each attached to the third and fourth stays; and an antenna including a conductor wound in a loop along the third pole, the third stay, the fourth pole, and the fourth stay.

Each of the leading and trailing poles may have a length of at least ten meters, and the leading and trailing poles may be spaced by at least thirty meters.

The third and fourth poles may extend to the first and second longitudinal stays and be attached thereto, dividing the frame in a matrix of rectangles, wherein several of the rectangles each supports an antenna.

The poles and stays may be conductive and configured to form the conductors of single-turn antenna windings.

The device may further comprise an attachment element at each crossing between a pole and a stay, wherein each single-turn antenna winding includes two parallel pole segments and two parallel stay segments secured in a rectangle by four attachment elements, and three of the four attachment elements ensure electrical conduction between the corresponding pole and stay segments, and the remaining one of the four attachment elements electrically insulates the corresponding pole segment from the corresponding stay segment.

Each attachment element may comprise an electrically conducting or insulating cuff mounted on the corresponding pole and configured to attach an end of a stay segment.

The device may further comprise additional internal longitudinal stays attached between the leading and trailing poles and distributed with the third and fourth longitudinal stays between the first and second longitudinal stays, and an antenna with a multiple-turn winding, wherein each turn is offset transversally from the previous turn by the spacing between the longitudinal stays.

The device may further comprise an antenna with a multiple-turn winding, wherein each turn is offset longitudinally from the previous turn by the spacing between the transversal poles.

Each of the third and fourth poles may be hollow and the antenna conductor be housed inside the third and fourth poles.

Each stay may be a pre-tensioned sheath and the antenna conductor be housed inside each sheath between the poles.

The aerodynamic damping structure may comprise multiple pennants.

The pennants may occupy together a surface area of at least nine square meters.

The pennants may include a fabric having regularly spaced perforations.

### Brief Description of Drawings

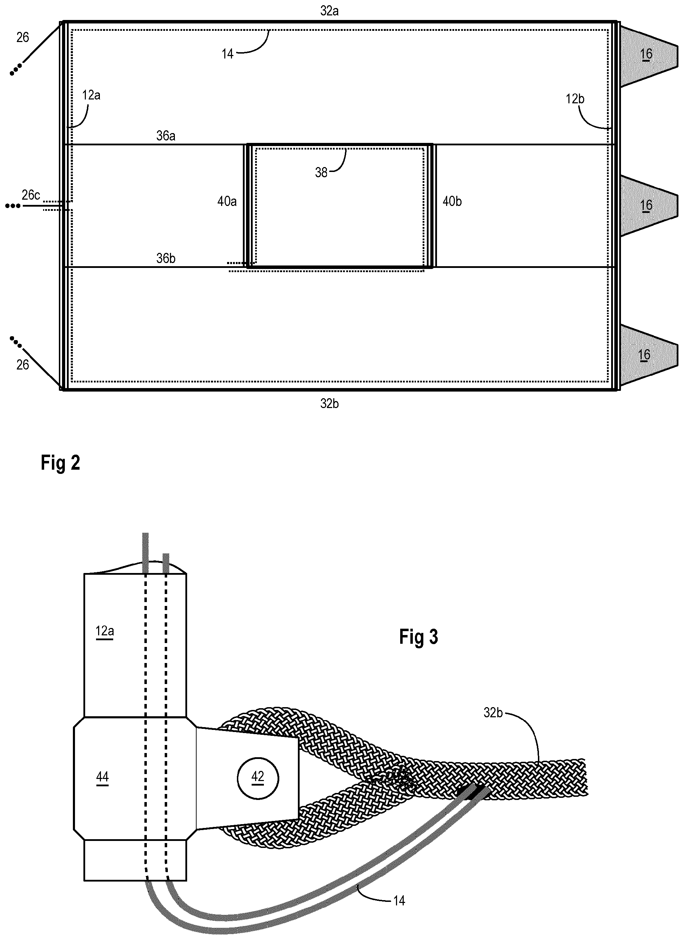

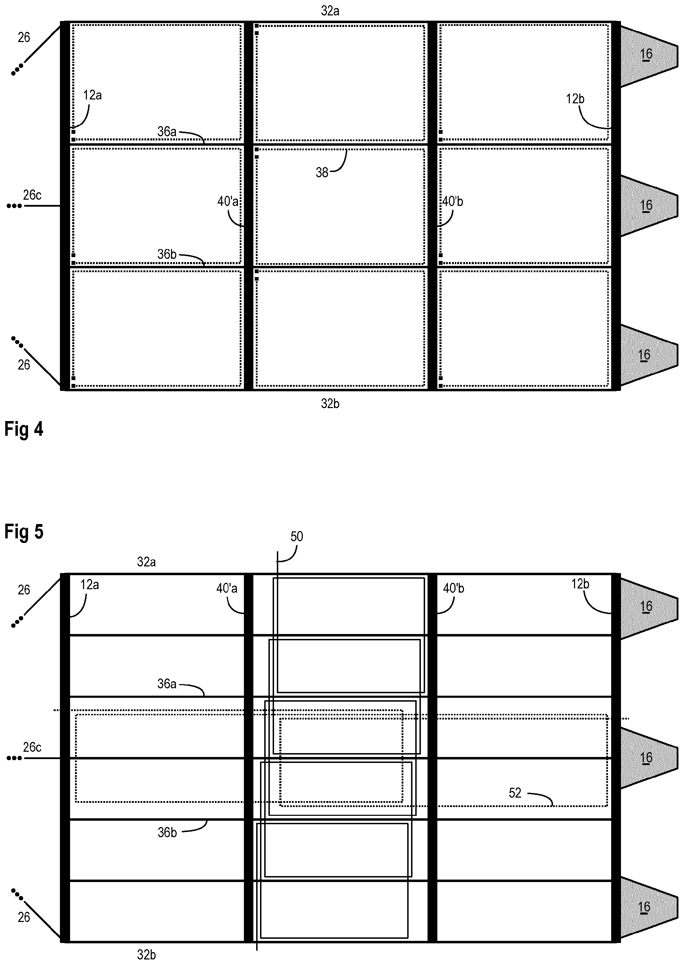

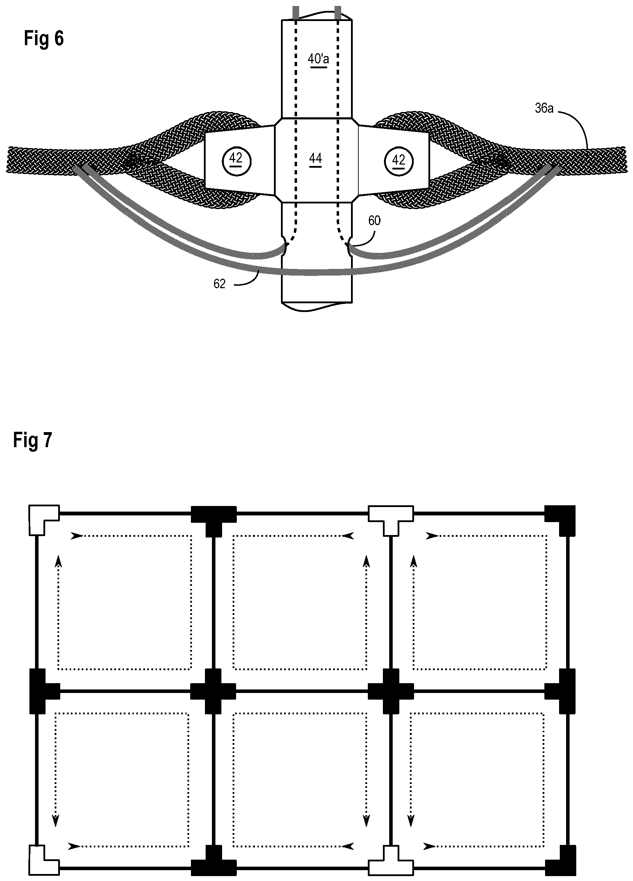

Other advantages and features will become more clearly apparent from the following description of particular embodiments of the invention provided for exemplary purposes only and represented in the appended drawings, in which:
▪ Figures 1A and 1B, previously described, are schematic perspective and side views of an exemplary conventional aircraft-towed device;
▪ Figure 2 is a schematic top or bottom view of an embodiment of a meshless frame serving as a support structure for measurement devices;
▪ Figure 3 is a detail view of an exemplary attachment structure between elements of the frame of figure 2;
▪ Figure 4 depicts an embodiment of an airborne frame bearing multiple smaller antennas;
▪ Figure 5 depicts an airborne frame conveying antennas having non-concentric windings;
▪ Figure 6 is a detail view of an exemplary attachment structure between intermediate elements of the frame of figure 4; and
▪ Figure 7 illustrates an embodiment of an airborne frame having single-turn antennas created with conductive poles and stays.

### Description of Embodiments

As previously mentioned, conventional airborne platforms for carrying measurement devices are essentially comprised of fabric or a close-knit mesh held firm during flight between elements of a frame, such as a leading pole and a trailing pole transversal to the flight direction. The belief was that such a mesh is necessary for ensuring sufficient lift for maintaining a desired attitude during flight, especially for very large platforms.

It actually appears that the use of fabric or mesh, especially in very large platforms, creates more lift than necessary, with the side-effect of causing significant drag.

Another belief was that the mesh confers a fixed shape to the platform, for instance rectangular, with a reduced number of frame elements. It actually appears that the role of the mesh is negligible for maintaining a fixed shape.

In embodiments disclosed herein, the fabric or mesh may be removed altogether. The platform may thus be reduced to a meshless frame.

Figure 2 schematically depicts one embodiment of such a meshless frame. Like the platform of figure 1A, the frame includes a leading transversal pole 12a that may be connected to an attitude-correcting structure through traction stays 26, and a trailing transversal pole 12b. The fabric of figure 1A is replaced by two longitudinal frame elements 32a, 32b, establishing respective lateral edges of the frame.

It appears that the mere elements thus forming the edges of the frame ensure significant lift at reasonable flight speeds of small aircraft (for example an average speed of 150 km/h), allowing the frame to assume a near-horizontal attitude. To perfect the horizontal attitude, an aerodynamic damping structure 16 may be attached to the trailing edge of the frame. This damping structure is configured to provide sufficient drag at the usual flying speed of the aircraft to lift the trailing pole towards the desired attitude of the frame. The aerodynamic damping structure 16 includes, for example, multiple pennants, as shown, made of a fabric that creates drag statically through friction and/or dynamically through flapping. For this purpose, the material used for the fabric may be similar to that used in airborne advertising banners, for example, having a weight of 50-80 g/m², and including regularly spaced perforations of 0.3-0.5mm in diameter. Other damping structures may be used, such as rigid flaps having external surfaces shaped to cause turbulence.

To be more precise, the attitude of the frame is actually determined by the direction of flight - the attitude will be substantially horizontal if the aircraft flies in a horizontal plane. The aircraft will normally fly at a relatively constant elevation, whereby "horizontal" actually means coplanar to the ground, which is the desired configuration.

Outstanding results were obtained with a meshless frame having a length of approximately 40 meters and a width of approximately 15 meters. The poles had a cross-section of 25mm, and three trapezoidal pennants of 2m x 2m were used. Although this structure may also prove satisfactory with smaller frames, it excels with very large frames, having a length of at least 30 meters and a width of at least 10 meters, and pennants occupying together a surface area of at least nine square meters.

In one embodiment, non-rigid materials may be used for the longitudinal frame elements. In fact, the longitudinal frame elements 32a, 32b may be supple, like the fabric of the conventional platform. These elements may be embodied by longitudinal stays attached between the ends of the poles. Such a configuration simplifies transport and storage.

Such frame is in fact articulated, i.e. the trailing pole 12b is free to shift laterally relative to the leading pole 12a, resulting in a possible parallelogram deformation. Such a deformation is however unlikely, at least over a significant period of time, because the frame would be in an unstable position. Therefore, diagonal stays that would prevent this parallelogram deformation are usually superfluous.

The meshless frame described up to now is all that is needed for carrying a transmission antenna that may be used for geophysical or other measurements such as thermic measurements, air density or pollution measurements, or the like. The transmission antenna may include a conductor 14 wound in one or more loops running along the successive frame elements, as shown by a dotted line. The antenna winding may start and end at a point of the leading pole 12a where the antenna conductor can be led towards the towing cable (not shown) along one of the traction stays 26, for instance a central traction stay 26c.

More traction stays 26 than those shown may be provided to confer satisfactory rigidity to the leading pole 12a. In order to confer rigidity to the trailing pole 12b, additional longitudinal stays may be attached between the poles 12a, 12b, such as two inner stays 36a, 36b placed at one third and two thirds of the frame width.

For performing measurements in some applications, such as geophysical measurements, a reception antenna is usually also provided. The reception antenna may be significantly smaller than the transmission antenna, for instance 13m x 5m where the transmission antenna is 40m x 15m. The reception antenna may have a conductor 38 that is wound, as shown by a dotted line, along an internal sub-frame including segments of the inner longitudinal stays 36a, 36b and two spaced apart transversal poles 40a, 40b attached between the stays 36a, 36b. The poles 40a and 40b may be placed approximately at one third and two thirds of the frame length. The reception antenna conductor may be led towards the front of the device along one of the inner stays 36a, 36b.

The antenna conductors could be external to the stays, and be attached to the stays at regular intervals. This would however increase drag and increase the risk of damaging the conductors.

Figure 3 is a detail view of an exemplary attachment structure between an end of the leading pole 12a and the stay 32b, showing an improved assembly for the antenna conductors. The stays, instead of being ropes or cables, may be in the form of sheaths. The sheaths may include high tensile strength braided fibers, such as aramid, high modulus polyethylene, or carbon fibers. Dyneema® sheaths for housing ropes may be used, for instance. Such sheaths are normally designed for protecting the ropes against wear, and not for contributing to the tensile strength of the ropes. The tensile strength of these sheaths alone is however more than sufficient for the stays in some of the applications envisioned here.

The various conductors used in the frame may then be housed within the sheaths. The poles are usually tubular or hollow, whereby the conductors may also be housed inside the poles. As shown, the sheath forming stay 32b houses two conductors 14, meaning that the transmission antenna has a two-turn winding in this example. The conductors 14 exit the sheath through an opening near the end of the pole and penetrate inside the pole, where they are led to the opposite end of the pole. The conductors are of course insulated to avoid short circuits.

As shown, the sheath may be terminated by an eye splice that is held by a pin or bolt 42 in a cuff 44 mounted to the pole 12a. The pole could also have a hole through which the end of the sheath is passed and knotted. The end of the sheath could be wound around the pole, and kept axially in place by pins traversing the pole.

A braided sheath, although it has sufficient tensile strength, may present a high elongation factor under traction. Such a feature could be incompatible with the conductors housed inside the sheaths. If no measures are taken, the sheaths would elongate in operation and cause rupture of the conductors inside. To avoid this, each sheath may be pre-tensioned while the conductors are housed inside. Once the conductors are housed, the ends of the sheath may be tightened around the conductors, whereby, if the sheath still contracts upon releasing tension, the conductors are compressed. Since the conductors can freely move inside the sheath, the conductors will assume a sinuous configuration. The conductors will then straighten to their full length without strain when the sheath elongates in operation.

A Dyneema® sheath designed for housing a 6mm rope may be pre-tensioned at 30 kg, for instance.

When the antenna conductors are housed inside the poles, the poles are preferably in a material permeable to electromagnetic radiation. The poles could thus be made of composite material including high modulus non-conductive fibers, such as aramid.

The poles could also be made of composite material including carbon fibers, which are conductive, whereby the poles could electromagnetically shield the antenna conductors within. In such cases, the antenna conductors may be electrically connected to the ends of the poles in the antenna path, whereby the poles become part of the antenna. For this purpose, the antenna conductors may be locally stripped from their insulation at the ends of the poles and be connected to the poles through screws or a conductive glue.

In other embodiments, multiple reception antennas may be used. Additional reception antennas may be mounted in front or behind the antenna 38 along the inner stays 36a, 36b. Reception antennas may also be mounted transversally, to the left or the right of the antenna 38.

In some embodiments, reception antennas and transmission antennas may be towed by different aircraft, drones or the like. Thus, one airborne frame may be designed to bear multiple antennas that are smaller than the frame, each antenna being defined, like antenna 38, between two longitudinal stays and two transversal poles.

Figure 4 depicts an embodiment of an airborne frame bearing multiple smaller antennas. The frame is divided in a 3x3 matrix of nine rectangles, for example, by the two longitudinal inner stays 36a, 36b, and by the two transversal inner poles 40, here extending to the two outer stays 32a, 32b, and labelled 40'a, 40'b.

The central rectangle of the matrix supports the antenna 38, like in figure 2. Each of the other rectangles may similarly support an antenna, as depicted by windings in dotted lines, achieving a frame bearing nine independent adjacent antennas in a matrix.

As previously mentioned, the poles may be hollow and the stays may be sheaths, whereby the antenna conductors may be housed in the poles and sheaths, offering reduced drag. Conductors connecting the individual terminals of the antenna windings (not shown) may also be housed inside the poles and sheaths, and be routed to control equipment placed in the attitude-correcting structure 18, such as in the pole 24.

In some applications, all rectangles in the matrix need not have an antenna. The rectangles having an antenna may be placed along various shapes, such as a cross, a ring or parallel strips. The columns and rows of the matrix need not have equal heights or widths in some applications, whereby the antennas may have different sizes.

Each antenna in figure 4 is shown in the form of a winding that may have one or multiple coaxial turns of a conductor. In some applications, the antenna winding may have multiple non-coaxial turns, as explained below.

Figure 5 depicts an airborne frame divided in a matrix of eighteen rectangles by the same transversal poles 12 and 40' as in figure 4, and seven equally spaced longitudinal stays, including the stays 32 and 36. The central column, as an example, supports an antenna 50 having non-coaxial turns spread over the rectangles of the column. More specifically, each turn has the size of two rectangles and is offset transversely by one rectangle, i.e. the spacing between the longitudinal stays, from the previous turn.

In other applications, an antenna 52 may have non-coaxial turns spread longitudinally, for example along the two central rows. As shown in dotted lines, each turn of the antenna 52 has the size of four rectangles and is offset from the previous turn by the spacing between the transversal poles.

The conductor segments of the turns have been shown as separated near the poles and stays for the purpose of clarification. In practice the conductor segments may be housed inside the poles and the stays as previously mentioned.

Figure 6 is a detail view of an exemplary attachment structure between an internal pole, such as 40'a, and one of the longitudinal stays, for instance 36a. The stay 36a is segmented at the pole, and each resulting stay segment is terminated by an eye splice. The attachment structure of figure 3 has been made symmetrical here, forming a cuff 44 with two pins 42 on either side for attaching the eye splices.

Like in figure 3, antenna conductors may be housed inside the stay segments, in the form of sheaths, and inside the pole. The pole may have openings 60 through which the conductors may pass from the sheaths into the pole. A conductor 62 for an antenna that does not use pole 40'a may be routed directly from one stay segment to the next, as shown.

If the antenna windings include only a single turn, the poles and stays may be conductive, for instance made of carbon fibers, whereby the poles and stays will act directly as the antenna conductors. Each rectangle of the matrix may form one turn, by electrically connecting the stay and pole segments in three corners and insulating the stay and pole segments in the fourth corner. The ends of the stay and pole segments in the insulated corner then form the access terminals of the antenna. Electrical connection or insulation at a corner may be achieved by using a conductive or insulating attachment structure.

Figure 7 illustrates a matrix of six rectangles made of three longitudinal stays and four transversal poles, where each rectangle forms an independent one-turn antenna. Conductive attachment structures at the pole and stay crossings are illustrated in black, whereas insulating attachment structures are illustrated in white. The insulating attachment structures are placed, in this example, at the ends of the first pole, creating two independent antenna windings in the first column, and at the ends of the third pole, creating four independent antenna windings in the second and third columns.

In some applications, the poles may be separable in segments that can be insulated from each other at the stay crossings. In such a case, placing an insulating attachment structure at a crossing may create up to four independent antenna windings, making it possible to form independent antenna windings inside a matrix of any size.

The attachment structures illustrated in figures 3 and 6 are suitable for achieving an unobstructed passage for conductors inside the poles. If few or no conductors are housed in the poles, the attachment structures may comprise ring bolts secured through the poles.

Although the meshless frame has been described up to now in examples of horizontal use, it may also be used vertically with an adapted attitude-correcting structure. The frame will not be subject to a parallelogram deformation - the frame will remain rectangular, but instead of flying with a horizontal axis, the frame will have an axis tilted downwards at the tail, which does not affect the measurements. This tilt results from the reduction in lift caused by the pennants being vertical instead of horizontal.

## Claims

1. An aircraft-towed device, comprising:
• a frame including a leading pole (12a) and a trailing pole (12b), the poles being substantially transversal to a flight direction;
• an aerodynamic damping structure (16) attached to the trailing pole (12b);
• first and second longitudinal stays (32a, 32b) attached between the poles, establishing substantially straight lateral edges of the frame under traction;
• third and fourth longitudinal stays (36a, 36b), each attached between the leading and trailing poles;
• third and fourth transversal poles (40a, 40b), each attached to the third and fourth stays; and
• an antenna (38) including a conductor wound in a loop along the third pole, the third stay, the fourth pole, and the fourth stay.

2. The device of claim 1, wherein each of the leading and trailing poles has a length of at least ten meters, and the leading and trailing poles are spaced by at least thirty meters.

3. The device of claim 1, wherein the third and fourth poles (40'a, 40'b) extend to the first and second longitudinal stays (32a, 32b) and are attached thereto, dividing the frame in a matrix of rectangles, wherein several of the rectangles each supports an antenna.

4. The device of claim 3, wherein the poles and stays are conductive and are configured to form the conductors of single-turn antenna windings.

5. The device of claim 4, comprising an attachment element (44) at each crossing between a pole and a stay, wherein each single-turn antenna winding includes two parallel pole segments and two parallel stay segments secured in a rectangle by four attachment elements, and three of the four attachment elements ensure electrical conduction between the corresponding pole and stay segments, and the remaining one of the four attachment elements electrically insulates the corresponding pole segment from the corresponding stay segment.

6. The device of claim 5, wherein each attachment element comprises an electrically conducting or insulating cuff (44) mounted on the corresponding pole and configured to attach an end of a stay segment.

7. The device of claim 3, comprising:
• additional internal longitudinal stays attached between the leading and trailing poles (12a, 12b) and distributed with the third and fourth longitudinal stays (36a, 36b) between the first and second longitudinal stays (32a, 32b), and
• an antenna with a multiple-turn winding, wherein each turn is offset transversally from the previous turn by the spacing between the longitudinal stays.

8. The device of claim 3, comprising an antenna with a multiple-turn winding, wherein each turn is offset longitudinally from the previous turn by the spacing between the transversal poles.

9. The device of claim 1, wherein each of the third and fourth poles is hollow and the antenna conductor is housed inside the third and fourth poles.

10. The device of claim 1, wherein each stay is a pre-tensioned sheath and the antenna conductor is housed inside each sheath between the poles.

11. The device of claim 1, wherein the aerodynamic damping structure (16) comprises multiple pennants.

12. The device of claim 11, wherein the pennants occupy together a surface area of at least nine square meters.

13. The device of claim 11, wherein the pennants include a fabric having regularly spaced perforations.
